# EUROPEAN PATENT APPLICATION

(11) **EP 2 682 944 A1**
(43) Date of publication of application: **08.01.2014**
(21) Application number: 12175458.4
(22) Date of filing: 06.07.2012
(51) Int. Cl.: G12B 5/00, G01Q 10/00, G01Q 10/04, B41J 25/00, H02N 2/02, G11B 9/14

(54) **Scanning microscope**

(71) Applicant: Nederlandse Organisatie voor Toegepast -Natuurwetenschappelijk Onderzoek TNO, 2628 VK Delft (NL)
(72) Inventor: Kuiper, Stefan, 2628 VK Delft (NL)
(74) Representative: Jansen, Cornelis Marinus

(57) **Abstract**

A scanning probe microscope comprises a base, a positioning stage mounted on the base, a platform mounted on the positioning stage and a probe tip on the platform, the positioning stage comprising
- a first and second linear displacement actuator, each having a main direction of displacement, the main directions of displacement of the first and second linear displacement actuator being oriented substantially parallel to each other,
- a first and second strut or struts coupled directly or indirectly between the platform and ends of the first and second actuators where the first and second actuators terminate in the main direction of displacement respectively, at least the first strut or struts being directed at an oblique angle to the main direction of displacement of the actuators.

## Description

### Field of the invention

The invention relates to a scanning probe microscope and a method of positioning the sensing tip of a scanning probe microscope.

### Background

An article by Schitter et al, IEEE transactions on control systems technology, VOL. 15, NO. 5, September 2007 discloses a positioning stage for a scanning probe microscope. A scanning probe microscope comprises sensing tip and a positioning stage that allows positioning of the tip three dimensions. Schitter's positioning stage comprises three piezo-stack actuators, to provide for x, y and z motion respectively. In a piezo-stack actuator a stack of a plurality of piezo layers is used to provide for a cumulatively combined stroke of displacement. This results in an actuator of elongate shape in the displacement direction.

A first and second pair of such piezo-stack actuators are provided with their displacement direction in the xy plane, along the x and y directions respectively. On one side these in the first and second piezo-stack actuators are attached to a frame and on the other side to a movable platform. A third piezo-stack actuator is provided on the platform with its displacement direction in the z-direction.

In order to allow for displacement in two directions, the first and second pair of piezo-stack actuators are each coupled to the platform via a parallelogram formed by a plurality of parallel struts. As used herein, a strut is a bar connected to the platform and the actuators by joints that allow for rotation of the axial direction of the bar, in this case in the xy plane. The parallelogram ensures that the platform does not rotate when the platform is displaced.

This positioning stage has the disadvantage that it is bulky. Moreover, one of the actuators may need to be provided in series with the others, which reduced stability. The bulkiness limits the application in fields of application where space is limited

### Summary

Among others, it is an object to provide for a reduced size scanning probe microscope.

A scanning probe microscope is provided that comprises a base, a positioning stage mounted on the base, a platform mounted on the positioning stage and a probe tip on the platform, the positioning stage comprising
- a first and second linear displacement actuator, each having a main direction of displacement, the main directions of displacement of the first and second linear displacement actuator being oriented substantially parallel to each other,
- a first and second strut or struts coupled directly or indirectly between the platform and ends of the first and second actuators where the first and second actuators terminate in the main direction of displacement respectively, at least the first strut or struts being directed at an oblique angle to the main direction of displacement of the actuators.

By substantially parallel arrangement of the main direction of displacement, and displacement direction translation by means of oblique struts a compacts probe is realized, or al least a probe with a more compact footprint at its base. The first and second actuator may be part of a larger number of actuators, which may all have substantially parallel main direction of displacement: for example three actuators that provide for displacement of the platform in three independent spatial directions. Alternatively, two actuators may be used to provide for displacement of the platform in two independent spatial directions. The actuators may be piezo stack actuators, or electromagnetic actuators, for example, which are known per se. Both are elongate, with a largest size in the main direction of displacement. Parallel arrangement of the main directions of displacement within manufacturing tolerances maximizes compactness, but increased compactness is already realized when the directions are substantially parallel. Increased compactness may be realized when the main directions of displacement of the actuators are at less than thirty and more preferably less than fifteen degrees to a common axis.

In an embodiment the device comprises first bearings between central parts of said struts and the platform, and second bearings between the central parts of the first and second struts and the ends of the first and second actuators respectively, the first and second bearings allowing for rotation of the central parts of the first and second struts relative to the platform and the ends of the first and second actuators respectively. This improves selection of motion directions.

In a further embodiment the end of each of the first and second actuators is coupled directly or indirectly to the platform by a parallel pair of first struts and a parallel pair of said second struts respectively, positions of the first and second bearings of the struts in each pair forming corners of a parallelogram. In this way rotation of the platform may be prevented.

A further embodiment comprises levers coupled between the actuators and the struts. This makes it possible to provide for more accurate motion control.

In an embodiment three actuators are arranged in a configuration that is symmetric under one hundred and twenty degree rotations. This balances the effect of the actuators. Distance sensors may be provided between the actuators for sensing a distance from the distance sensors to the platform. This provides for suppression of errors in the distance measurement.

The platform, the levers and the struts are integrally formed, for example by spark erosion from a starting material, such as an aluminum block. In this way a structure that provides for accurate movements can more easily be realized.

### Brief description of the drawing

These and other objects and advantageous aspects will become apparent from a description of exemplary embodiments, with reference to the following figures.
Figure 1a shows a cross-section of a scanning probe microscope
Figure 1b shows a schematic top view
Figure 1c shows a strut
Figure 2 shows cross-section of a further scanning probe microscope
Figure 3, 4 show schematic top views of further scanning probe microscopes
Figure 5, 5a show a scanning probe microscope with sensors

### Detailed description of exemplary embodiments

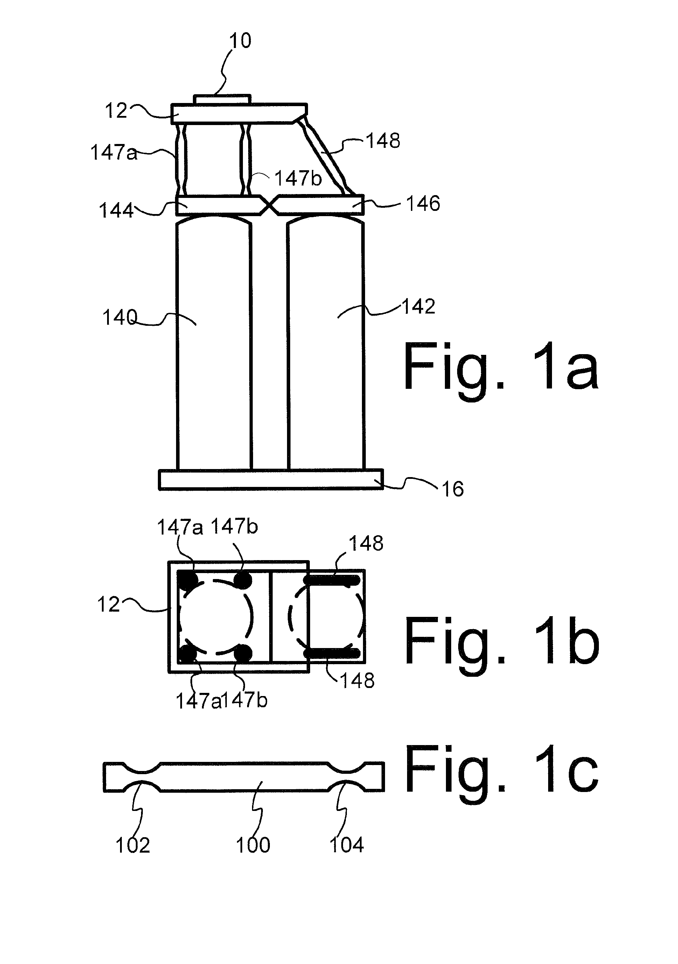

Figure 1a shows a cross section of a scanning probe microscope. The microscope comprises a probe tip 10 located on a platform 12 and a positioning stage between platform 12 and a base 16. The positioning stage may provide for scanning of platform 10 in two directions (the vertical and horizontal directions of figure 1a), or it may be part of a larger positioning stage with more degrees of freedom. The positioning stage comprises a first and second elongate piezo stack actuator 140, 142, with parallel main displacement directions oriented between base 16 and platform 12. As is known per se, a piezo electric stack actuator comprises a stack of layers of piezo electric material, stacked in the main displacement direction, so that displacements created by the layers add up in that direction.

Furthermore, the positioning stage comprises an intermediate platform 144, a lever 146, and struts 147a,b, 148. Intermediate platform 114 is located attached on top of first piezo stack actuator 140. Lever 146 is hingingly connected to intermediate platform 144 and extends over a top of second piezo stack actuator 142. As used herein hingingly means that only rotation around a hinge axis is allowed. In the example of figure 1a, the hinge axis extends perpendicular to the plane of the drawing. A hinging connection may be realized by a linear flexure bearing for example, i,e, by providing by a linear narrow part at connection between intermediate platform 114 and lever 146, but instead other types of hinge may be used. The hinging connection allows for rotation of lever 146 around the hinge axis, when its end is moved up or down by second piezo stack actuator 142. Preferably, the tops of piezo stack actuators 140, 142 are rounded e.g. cylindrically to facilitate rotation around the hinge. A rounded cap may be used on piezo stack actuators 140, 142 for this purpose.

Platforms 12, intermediate platform 114, levers 146 and the struts may be of a metal like aluminum.

The struts have internal flexure bearings. As is known per se, a flexure bearing involves a relatively thinner point in a structure that allows for relative rotation of the parts on different sides of the bearing. Figure 1c shows an example of a strut with a first and second flexure bearing. The struts are bar shaped. To allow for the rotation, the struts have narrowed parts 102, 104 adjacent the points where the bars are fixed to the other structures. In an embodiment struts may be formed integrally with the other structures. Spark erosion may be used to form the struts and the other structures from a piece of starting material. Alternatively, other types of bearing may be used, such as ball bearings between the struts and the platform and the levers.

First struts 147a,b are connected in parallel from intermediate platform 144 to platform 12. A second strut 148 is connected from the end of lever 146 to platform 12, at an oblique angle to lever 146 and platform 12, and at an angle to first struts 147a,b. The angle of second strut 148 to first struts 147a,b may be in a range of thirty to sixty degrees for example. The angle may be substantially forty five degrees for example.

Figure 1b shows a top view, schematically indicating the tops of piezo stack actuators 140, 142. As can be seen further first and second struts 147a,b, 148 may be present in parallel with the first and second struts 147a,b, 148 shown in figure 1a. Intermediate platform 144 and lever 146 may extend along the axis of rotation of the hinge, so that first and second struts 147a,b, 148 may be connected at different locations. Although first struts 147a,b are all shown to be vertical, that is, parallel to each other, this is not necessary. The upper first struts 147a,b in figure 1a may be parallel to each other in a first direction and the lower first struts 147a,b in figure 1a may be parallel to each other in a second direction, the first and second direction having a non zero angle. In fact this may stabilize against unwanted motion in the vertical direction of figure 1a.

In operation, electrical voltages are applied to first and second piezo stack actuator 140, 142 at electrodes (not shown). Temporal variation of the electrical voltages causes the piezo stack actuators 140, 142 to expand and shrink mostly in their elongate direction, i.e. in the direction between base 16 and platform 12. This results in displacements of the top of piezo stack actuators 140, 142 in that direction, which will be called the displacement direction of piezo stack actuators 140, 142.

Joint displacement of the top surfaces of first and second piezo stack actuators 140, 142 causes platform 12 to be moved in the displacement direction of piezo stack actuators 140, 142. Differential displacement, wherein the top surface of second piezo stack actuator 142 is displaced relative to that of first piezo actuator 140 causes lever 146 to rotate relative to intermediate platform 144, around their hinged connection. This moves the end of second strut 148, which transmits the motion to platform 12, at least partly in a direction perpendicular to the displacement direction of piezo stack actuators 140, 142 (the horizontal direction in figure 1a). Because first struts 147a,b form a parallelogram with intermediate platform 144 and lever 146, the orientation of platform 12 remains unchanged during this movement. Although the parallelogram corresponds with intermediate platform 144 and lever 146, it may be noted that at the same time another parallelogram is formed by the positions of the flexure bearings at the corners of the other parallelogram. Properly speaking, this parallelogram controls the parallel nature of the movement of platform. Preferably the line between corresponding bearings on the struts is parallel to the hinge direction of the lever. In this way, the hinge direction of the lever, which is fixed, fixes part of the orientation of the platform.

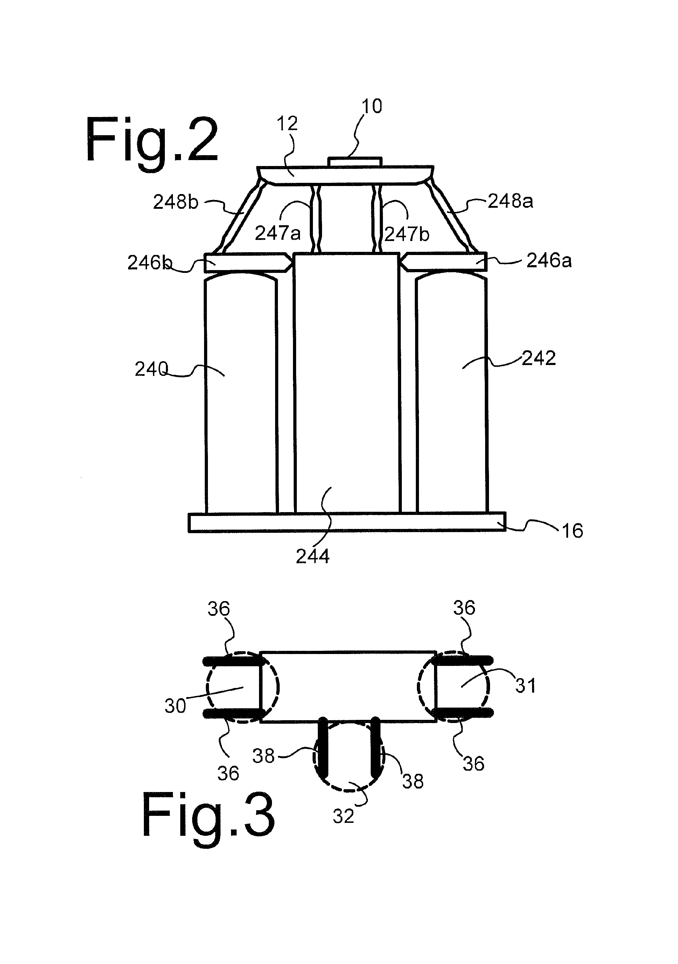

Figure 2 shows a cross section of a further scanning probe microscope. The microscope comprises a probe tip 10 located on a platform 12 and a positioning stage between platform 12 and a base 16. Again, the positioning stage may provide for scanning of platform 10 in two directions (the vertical and horizontal directions of figure 2), or it may be part of a larger positioning stage with more degrees of freedom. The positioning stage comprises a first and second elongate piezo stack actuator 240, 242, with parallel main displacement directions oriented between base 16 and platform 12. Furthermore, the positioning stage comprises a post 244, levers 246a,b, and struts 247a,b, 248. Post 244 is located between first and second piezo stack actuator 240, 242 in parallel with the main displacement directions. The positioning stage is symmetric about post 244. Levers 246a,b are hingingly connected on two sides of post 244 and extend over a top of first and second piezo stack actuator 240, 242 respectively. First struts 247a,b are connected from platform 12 to post 244. First struts 247a,b are substantially parallel to each other. Second struts 248a,b are connected from platform 12 to the ends of levers 246a,b, at an angle to first struts 247a,b. The angle may be in a range of thirty to sixty degrees. The angle may be substantially forty five degrees for example. As in the embodiment of figure 1a-b, pairs of parallel struts may be used, only one strut 247a,b, 248a,b of each pair being shown. Each pair may be part of a respective parallelogram formed by platform 12 and a lever 246a,b or post 244.. Here to another parallelogram may be identified with positions of the flexure bearings at the corners of the other parallelogram. Properly speaking, this parallelogram controls the parallel nature of the movement of platform.

Although the connection between levers 246a,b and post 244 is shown beyond the point where first struts 247a,b connect to posts 244, it should be appreciated that this is not necessary. Levers 246a,b may leave an opening to connect first struts 247a,b to posts even if the connection between levers 246a,b and post 244 do not lie beyond the point where first struts 247a,b connect to posts 244.

In operation, joint displacement of the top surfaces of first and second piezo stack actuators 240, 242 causes platform 12 to be moved in the displacement direction of piezo stack actuators 140, 142. Differential displacement, wherein the top surface of second piezo stack actuator 142 are displaced with opposite sign along the main displacement direction relative the top of post 244, causes levers 246a,b to rotate relative to post 244, around their hinged connections. This moves the ends of second struts 148a,b, which transmits the motion to platform 12, at least partly in a direction perpendicular to the displacement direction of piezo stack actuators 240, 242 (the horizontal direction in figure 2a). Because first struts 247a,b are part of a parallelogram together with platform 12 and post 244, the orientation of platform 12 remains unchanged during this movement.

The positioning stage may be used to provide for displacement of the probe in two directions as described: the direction of displacement of the piezo stack actuators 140, 142 and a direction perpendicular to that direction. In other embodiments displacement in three directions or in another combination of directions may be provided for.

Figure 3 shows a top view of scanning probe microscope that allows for movement in three directions. A first, second and third piezo stack actuator 30, 31, 32 are used, with first and second struts 36, 38. The main displacement directions of first, second and third piezo stack actuator 30, 31, 32 are oriented parallel to each other. First and second piezo stack actuator 30, 31 are used to perform the functions of first and second piezo stack actuator 240, 242 of the embodiment of figure 2, with second struts 36 in the role of second struts 248a,b of the embodiment of figure 2. Third piezo stack actuator 32 is used similar to second piezo stack actuator 142 of the embodiment of figures 1a,b. Together, first and second piezo stack actuator 30, 31 take over the function of first piezo stack actuator 140 of the embodiment of figures 1a,b and their struts 36 take over the role of struts 247a,b. Common displacement of first and second piezo stack actuator 30, 31 may provide the displacement of first piezo stack actuator 140 of the embodiment of figures 1a,b.

In an alternative embodiment four piezo stack actuators may be used, forming two pairs, each pair providing for movement in a respective direction perpendicular to the main displacement direction, with each pair performing the function of first and second piezo stack actuator 240, 242 of the embodiment of figures 2 for their direction.

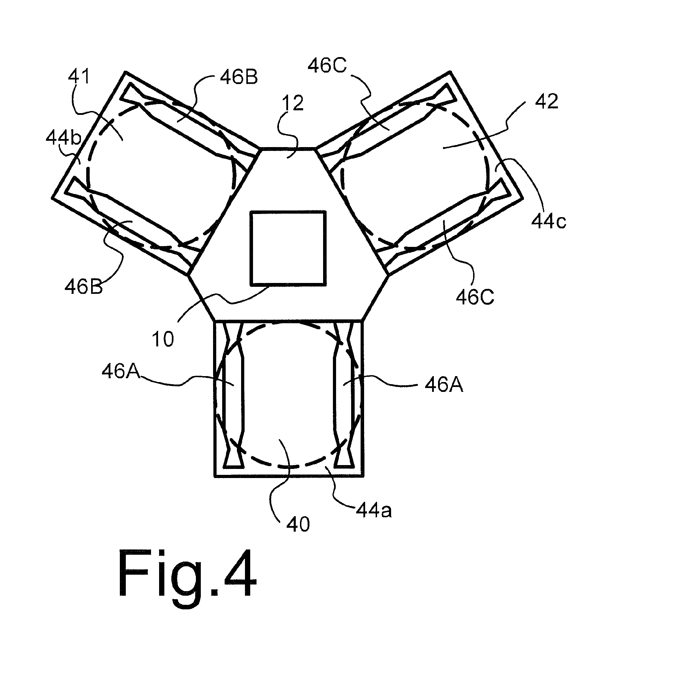

Figure 4 shows another scanning probe microscope that allows for movement in three directions. A first, second and third piezo stack actuator 40, 41, 42 are used. The main displacement directions of first, second and third piezo stack actuator 40, 41, 42 are oriented parallel to each other. First, second and third piezo stack actuator 40, 41, 42 are located on a circle at hundred and twenty degree angles from each other. First, second and third levers 44a-c are provided, extending of the top of respective ones of piezo stack actuators 40, 41, 42. Levers 44a-c may be hingingly connected to a central post (not shown) or respective posts. A pair of first struts 46a is connected in parallel with each other from the ends of first lever 44a to platform 12. First struts 46a are provided at an oblique angle relative to the main displacement directions of first, second and third piezo stack actuator 40, 41, 42. The angle may lie in a range from thirty to sixty degrees. The angle may be substantially forty five degrees for example. First struts 46a and the lines between their attachments to first lever 46a and platform 12 form a parallelogram, i.e. the latter lines are also parallel. It may be noted that at the same time another parallelogram is formed by the positions of the flexure bearings at the corners of the other parallelogram.

Similarly a pair of second struts 46b is connected in parallel with each other from the ends of second lever 44b to platform 12. A pair of third struts 46c is connected in parallel with each other from the ends of third lever 44c to platform 12. The struts of the first pair may be at hundred and twenty degree angles to the struts of the second pair and so on, in a projection on a plane perpendicular to the main displacement directions of piezo stack actuators 40, 41, 42. Second and third struts 46b,c are each part of a parallelogram, with lines between attachment points to second and third levers 44b,c and platform 12. It may be noted that at the same time another parallelogram is formed by the positions of the flexure bearings at the corners of the other parallelogram.

In operation first, second and third piezo stack actuator 40, 41, 42 may be used to generate displacement of platform 12 in three directions. Each different combination of displacements of the tops of piezo stack actuators 40, 41, 42 results in a different three dimensional displacements of platform 12. Voltages may be applied to piezo stack actuators 40, 41, 42 independently of one another, via respective electrodes (not shown) for the different piezo stack actuators 40, 41, 42. In a common mode the same voltages may be applied, which will result in displacement of platform 12 in the main displacement direction of piezo stack actuator 40, 41, 42. When the top of one of the piezo stack actuators 40, 41, 42 is displaced in with one sign of displacement (e.g. up) and displacements of the others are equal to each other but of opposite sign (e.g. down) compared to the sign of displacement of the first one of the piezo stack actuators 40, displacement of platform 12 in a direction away from the one of the piezo stack actuators 40, 41, 42 is realized. Dependent on the relative size of the displacements this may be accompanied by an upward or downward displacement or constant height of platform 12.

The parallelograms comprising the struts 46a-c ensure that the orientation of platform 12 remains the same for all displacements. Properly speaking, the parallelogram with positions of the flexure bearings in the struts controls the parallel nature of the movement of platform.

In an embodiment one or more position sensors may be used that measure displacement of platform 12 or the probe tip in different directions. Outputs of the sensors may be used to trace the probe tip location with respect to the sample, which may be used to process measurement results obtained with the probe tip.

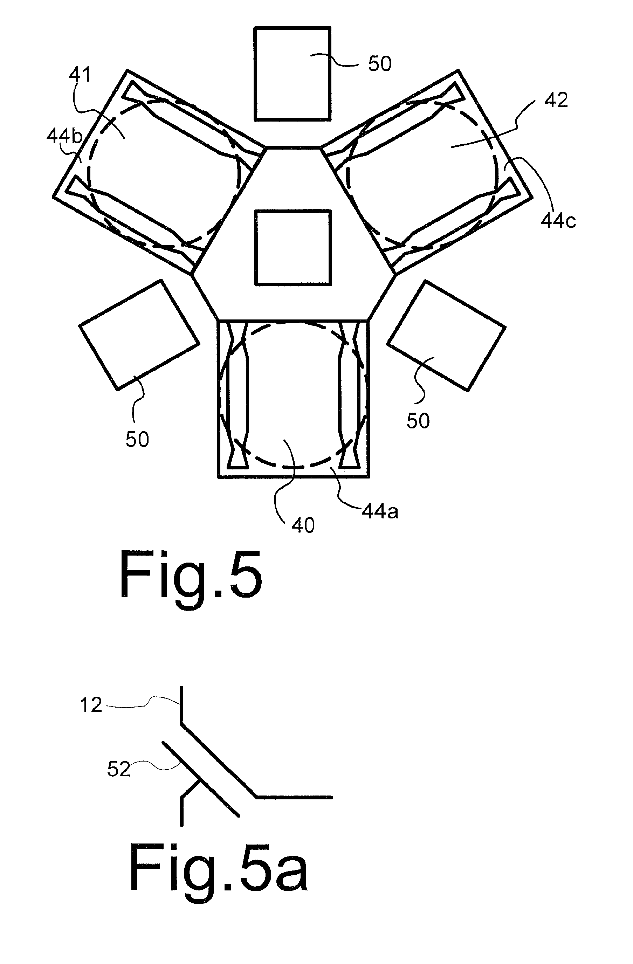

Figure 5 shows an arrangement wherein sensors 50 are shown schematically, located between respective pairs of the piezo stack actuators 40, 41, 42. Sensors 60 may be capacitive sensors for example, as illustrated in cross-section in figure 5a, each sensor comprising a first capacitor plate 52, platform 10 (shown only partly) formng a second plate. As another example, interferometric sensors may be used, wherein plate 52 may be replaced by an interferometer that uses a surface of platform 10 as a reflector in the interferometric light path. The arrangement of the piezo stack actuators allows the sensors pointed towards the location of the probe tip. By centering all sensors in the direction of the tip location the measurement lines are free of Abbe-errors, which means that slight rotations of the platform 12 cannot cause measurement errors. This increases measurement accuracy.

In a further embodiment feed back control of the voltages applied to the piezo stack actuators of any of the earlier embodiments may be used. A difference between a set position and the measured position indicated by the sensors may then be used to control voltages applied to the piezo stack actuators in a feedback loop. Alternatively, feed forward may be used, which may involve computation of the required voltages from a desired position using a mathematical computation, or use of the desired position to look up the required voltages from a lookup table.

Although embodiments with struts connected to an intermediate platform and/or levers have been shown, it should be appreciated that alternatively the struts may be coupled directly to the top of the piezo stack actuators. The use of additional levers and/or an intermediate platform has the advantage that the structure of the struts and the levers and/or an intermediate platform can be integrally formed, and manufactured for example by spark erosion. The piezo stack actuators may then be added to the integrally formed structure. Furthermore, although hingingly connected levers are used, it should be appreciated that alternatively auxiliary platforms may be used instead of the levers, the auxiliary platforms being attached on top of piezo stack actuators. However, use of hinging connections makes it easier to provide for accurate parallelograms and it may increase the resulting displacement.

Although embodiments with piezo stack actuators have been described, it should be appreciated that other types of actuators may be used, such as magnetic actuators (comprising a magnet in a coil for example, electric current through the coil being used to move the magnet. In this case too, space can be saved by placing the actuators parallel to each other. The surface of a piezo stack actuators may exhibit displacements in more than one direction when a volgage is applied. The direction wherein the largest displacement occurs is referred to as the main displacement direction.

Although embodiments have been described wherein the main displacement directions are parallel within manufacturing tolerances, it should be appreciated that some deviation from such a parallel arrangement forms no problem when levers are used. The levers determine the displacement of the platform and the actuators move the levers in the same way, independent of whether the main displacement directions are strictly parallel. The parallel arrangement reduces the required space, but deviation from the parallel direction may still result in space saving. deviations that result in space saving will be termed substantially parallel. When the deviations between the main displacement directions of different actuators from a central direction (the vertical in figures 1a, 2) is less than thirty degrees and more preferably less than ten degrees, space savings are realized.

Although embodiments have been described wherein each time two struts are used in parallel, it should be appreciated that more struts may be used in parallel. Where it is mentioned that a pair of parallel struts is provided, this does not exclude that more than two struts are used. When the pair of parallel struts forms a parallelogram, the bearings of these struts preferably lie in line along the sides of the parallelograms.

## Claims

1. A scanning probe microscope comprising a base, a positioning stage mounted on the base, a platform mounted on the positioning stage and a probe tip on the platform, the positioning stage comprising
- a first and second linear displacement actuator, each having a main direction of displacement, the main directions of displacement of the first and second linear displacement actuator being oriented substantially parallel to each other,
- a first and second strut or struts coupled directly or indirectly between the platform and ends of the first and second actuators where the first and second actuators terminate in the main direction of displacement respectively, at least the first strut or struts being directed at an oblique angle to the main direction of displacement of the actuators.

2. A scanning probe microscope according to claim 1, comprising first bearings between central parts of said struts and the platform, and second bearings between the central parts of the first and second struts and the ends of the first and second actuators respectively, the first and second bearings allowing for rotation of the central parts of the first and second struts relative to the platform and the ends of the first and second actuators respectively.

3. A scanning probe microscope according to claim 2, wherein the end of each of the first and second actuators is coupled directly or indirectly to the platform by a parallel pair of first struts and a parallel pair of said second struts respectively, positions of the first and second bearings of the struts in each pair forming corners of a parallelogram.

4. A scanning probe microscope according to claim 3, comprising one or more support posts on the base, and first and second levers hingingly connected to the one or more support posts, the first and second lever extending over the end of the first and second actuators respectively, each struts of each pair being coupled between a respective one of the lever and the platform, the parallelogram of the pair of struts having first legs between the positions of the first bearings and second legs between the positions of the second bearings, the first and second legs running parallel to a hinge axis between the lever and one of the one or more support post to which the lever is hingingly connected.

5. A scanning probe microscope according to any one of the preceding claims, comprising a third linear displacement actuator, having main directions of displacement substantially parallel to main directions of displacement of the first and second actuators, and third strut or struts coupled directly or indirectly between the platform and an end of the third actuator where the third actuator terminates in the main direction of displacement.

6. A scanning probe microscope according to claim 5, wherein the third strut or struts are directed at an oblique angle to the main direction of displacement of the actuators.

7. A scanning probe microscope according to claim 5 or 6, wherein first, second and third actuators are directed at the same oblique angles to the direction of displacement of the actuators in different planes through and radiating from a central axis that is parallel to the main direction of displacement.

8. A scanning probe microscope according to claim 5, 6, 7, wherein the first, second and third actuators are arranged at successive positions along a virtual circle, at one hundred and twenty degree angles from each other.

9. A scanning probe microscope according to claim 8, comprising three distance sensors for sensing a distance from the distance sensors to the platform, the distance being located between successive pairs of the first, second and third actuator.

10. A scanning probe microscope according to any one of the preceding claims, wherein struts between the platform and the ends of at least two of the actuators are directed at the same oblique angles to the direction of displacement of the actuators in different planes through and radiating from a central axis that is parallel to the main direction of displacement.

11. A scanning probe microscope according to any one the preceding claims, comprising one or more support posts on the base, and levers hingingly connected to the one or more support posts, each lever extending over the end of a respective one of the actuators, the struts being coupled between the levers and the platform.

12. A scanning probe microscope according to claim 4 or 11, wherein the platform, the levers and the struts are integrally formed.

13. A scanning probe microscope according to any one the preceding claims, wherein the first and second bearings are strut bearings in the struts.

14. A scanning probe microscope according to any one the preceding claims, wherein the actuators are piezo stack actuators.

15. A scanning probe microscope according to any one the preceding claims, wherein the actuators are electromagnetic actuators, each comprising a coil and a magnet movable relative to the each other in the main displacement direction.
